# EUROPEAN PATENT SPECIFICATION

(11) **EP 0 307 066 B1**
(45) Date of publication and mention of the grant of the patent: **12.05.1993**
(21) Application number: 88302610.6
(22) Date of filing: 24.03.1988
(51) Int. Cl.: C04B 18/14, B28B 1/32, B65G 53/32

(54) **Method of shotcreting**
Betonspritzverfahren
Procédé de projection du béton

(30) Priority: 11.09.1987 NO 873789
(43) Date of publication of application: 15.03.1989
(73) Proprietor: Elkem ASA, 0377 Oslo (NO)
(72) Inventor: Danielssen, Tore, Vagsbygd N-4621 Kristiansand (NO); Herfurth, Eike, D-7753 Allensbach 2 (DE)
(74) Representative: Rees, David Christopher

(56) References cited:
- DE-A- 3 343 948
- DE-A- 3 537 274
- DE-A- 3 703 762
- STRASSEN- UND TIEFBAU, no. 4, April 1984, Isernhagen D. M LLER "Das Betonna - und Trockenspritzverfahren" pages 37-40

## Description

The present invention relates to a method of shotcreting and more particularly to a method for adding silica fume to dry shotcrete mixture. Shotcreting is a process for pneumatically projecting mortar or concrete at high velocity onto a surface or a structure.

In a dry shotcrete process, all the components except water and sometimes liquid accelerators are mixed in the dry state and the mix is conveyed by an air stream through hoses or pipes to a spray nozzle where water is added and the mix, including the water, is thrown towards the structure to be covered. In a wet shotcrete process, a ready mixed concrete including water is transported through hoses or pipes to a spray nozzle where compressed air is applied to throw the mix towards the structure to be covered.

One of the disadvantages of shotcreting processes is the very high rebound losses which are experienced. When using ordinary concrete mixtures, the rebound losses both for the dry and the wet shotcrete processes may exceed 40% by weight of the total amount of concrete sprayed onto a surface. Furthermore, when using ordinary concrete mixtures, the applied layer thickness for one pass is limited to about 5cm or lower.

In the wet shotcrete process, the above drawbacks have been partly overcome by adding silica fume to the concrete batch. The addition silica fume to the concrete batch greatly enhances the cohesiveness of the concrete and so the rebound losses are reduced to below 10% and it is possible to apply a layer of 20cm or more in one pass on vertical surfaces.

In the wet shotcrete process, the silica fume is added to the concrete batch before it is pumped through the hoses to the spray nozzle.

It is also known to use silica fume in the dry shotcrete process. This is done by mixing dry silica fume with the other dry ingredients, i.e. cement and sand, after which the dry mixture is transported by an air stream to the nozzle where water is added.

The silica fume mentioned above consists of extremely fine, amorphous, spherical silica particles containing approximately 90% by weight SiO₂. The specific surface area is between 15 and 30 m²/g and the particles have a diameter between 0.1 and 0.2 µm.

This silica fume is obtained from the off-gases from electric furnaces for the production of silicon or ferro-silicon. The silica fume can also be obtained by reduction of SiO₂ to SiO-gas and reoxidation of the SiO in air.

Due to the very small particle size and the high surface area the silica fume causes problems when added to the dry mix in the dry shotcrete process. Firstly, a dusting problem arises when adding the dry silica fume to the cement and sand. Furthermore, it is very difficult to obtain a proper wetting of the silica fume particles in the nozzle. It is therefore necessary to use a nozzle with two water rings whereby the dry mix is prewetted by adding water through a first water ring before the final amount of water is supplied through the second water ring in the nozzle.

However, even with this prewetting, the silica fume particles are not wetted to a satisfactory extent and when the cement mixture reaches the surface onto which it is sprayed, the mixture is non-homogeneous. Thus the rebound losses are much higher than for wet shotcrete containing silica fume, but they are about half of the rebound losses for an ordinary dry shotcrete mixture.

It is an object of the present invention to provide a shotcreting method which enables a thicker layer to be applied with a reduced rebound percentage.

It is a further object of the present invention to provide a method for adding silica fume to the concrete mixture for use in a shotcreting process which makes it possible to overcome the above mentioned drawbacks and disadvantages of the known method of adding silica fume to dry shotcrete mixture.

US Patent No. 4772327 discloses a wet shotcreting process in which an aqeous solution of various components, optionally including finely divided silica, is supplied to a wet premix of concrete in a nozzle. It is suggested that the additives are more active when added together with water.

GB-A-2131409 describes a concrete additive in the form of a slurry including micro silica and a water reducing agent though this publication makes no reference to shotcreting.

According to one aspect of the invention, there is provided a method of dry shotcreting which comprises forming a premix of cement and sand, supplying the dry premix to a nozzle, supplying water to the nozzle and expelling the resulting mixture of cement sand and water from the nozzle, characterised in that silica fume is applied to the dry premix together with the water.

Preferably, the silica fume is added to the water in the form of a slurry of water and silica fume which slurry has a content of less than 50% by weight of silica fume. According to a preferred embodiment of the present invention, the water entering the nozzle has a silica fume content of between 5 and 30% by weight. More preferably, the water entering the spray nozzle contains between 10 and 25% by weight of silica fume.

By the method of the present invention therefore, the silica fume particles are already mixed with water when supplied to the dry shotcrete mixture. Thus the problem of wetting the silica fume particles is either alleviated or avoided. Furthermore, an extremely good mixing of the silica fume into the concrete may be obtained. As a result, the rebound losses are reduced to between 5 and 10 %, and a significant increase of the strength of the shotcrete may be achieved. Additionally, the impermeability of the sprayed concrete may be increased by a factor of at least 10.

Additives, such as curing accelerators and/or water-reducing agents may be added to the slurry of silica fume and water.

The silica fume can be added in at least two ways.

In one preferred embodiment of the invention, an aqueous slurry containing up to 50% silica fume is continuously fed to the water pipe leading to the nozzle, in an amount necessary to obtain the desired amount of silica fume in the water pipe. This embodiment has the major advantage that the amount of silica fume added to the shotcrete is not dependent upon the amount of water added to the shotcrete. Thus, if the flow of water to the nozzle is adjusted, the amount of silica fume will remain the same, as the amount of silica fume is dependent only upon the flow of silica fume slurry to the water pipe. Preferably, the slurry reaching the nozzle has a silica fume content of less than 40% by weight.

In another embodiment of the present invention, a batch of silica fume slurry having the desired content of silica fume is prepared and fed into a tank before the shotcreting process is start. All the water and silica fume and then fed from this tank directly to the spray nozzle during the shotcreting process. In this embodiment of the process an adjustment of the water flow to the nozzle also results in an adjustment in the amount of silica fume added to the shotcrete.

The preferred amount of silica fume in the final shotcrete mix is between 5 and 25% by weight of the slurry and preferably between 6 and 10% by weight of the cement.

It should be appreciated that coarse particles should be avoided in the silica fume as such particles would tend to plug up the holes in the water ring in the nozzle. The holes in the water ring would normally be between 0.6 and 2.5mm. As mentioned above the diameter of the silica fume particles is between 0.1 and 0.2 µm and the silica fume particles will therefore normally not block or plug up the holes in the water ring.

The invention may be carried into practice in various ways and two embodiments will now be described by way of example with reference to the accompanying drawings, in which:
Figure 1 is a schematic view of a dry shotcrete method with the addition of silica fume according to a first embodiment of the present invention;
Figure 2 is a schematic view of a dry shotcrete method with the addition of silica fume according to a second embodiment of the present invention; and
Figure 3 is a cross-sectional view of the water-ring used to an enlarged scale, taken along line I-I in Figure 1.

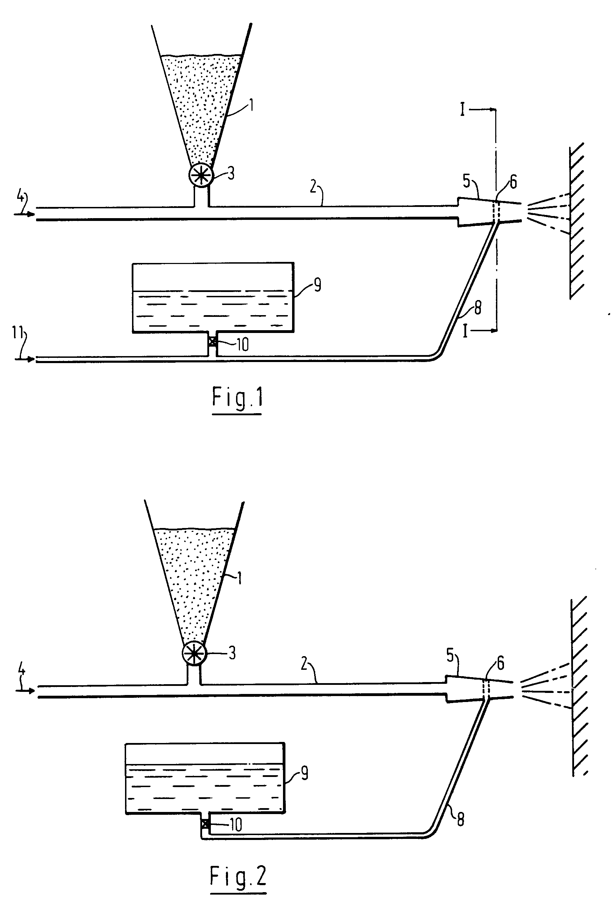

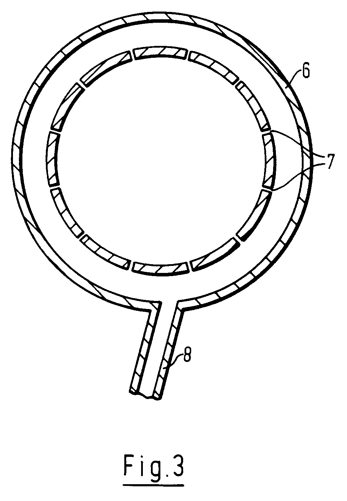

In both embodiments illustrated in Figures 1 and 2, a premix of cement and sand is formed in a bin 1. The premix is charged from the bin 1 into a hose 2 at a predetermined rate by means of a discharge unit 3. The premix is transported along the hose 2 by means of compressed air 4 to a nozzle 5. The nozzle 5 is equipped with a water-ring 6 as shown in Figure 3. The water ring is equipped with openings 7 for spraying of a water curtain in front of the premix which is projected through the nozzles. Water is supplied to the water-ring through a pipe 8. A silica slurry having a silica content of 50% by weight or less is also fed through the pipe 8 to the nozzle 5.

In the embodiment shown in Figure 1, the tank 9 is filled with a silica fume slurry containing about 50% silica fume and about 50% water. This silica fume slurry is a commercial product supplied by Elkem a/s under the trademark EMSAC. A preset amount of the EMSAC slurry in the tank 9 is continuously fed into the water pipe 8 in order to obtain a slurry of silica fume and water having the predetermined content of silica fume. The water pipe 8 is connected to a water supply 11 of normal industrial water. If the available industrial water pressure is too low, the water pressure can be increased by including a high pressure water pump. A valve 10 is arranged to regulate the flow of EMSAC slurry from the tank 9 to the pipe 8. An adjustment of the flow of water will not influence the amount of silica fume added to the shotcrete.

In the embodiment shown in Figure 2, a silica fume slurry having the desired content of silica fume is premixed in the tank 9 before the shotcreting process is started. In this embodiment, all the water is supplied from the tank 9.

In either embodiment, curing accelerators, water-reducing agents etc. can be added to the silica fume slurry in order to obtain the necessary rheological properties in the shotcrete.

The invention will be further illustrated by means of the following example.

### EXAMPLE

A full scale test was carried out in a mountain tunnel, using a dry mixture of 350kg cement/m³ and sand with a particle size of 0 - 8mm. The dry mix had a water content of about 3%. Silica fume slurry containing 33% by weight of silica fume and 67% of water was supplied to the tank 9 of Figure 2. This slurry was fed through the water ring 6 in the nozzle 5 to the dry mix in order to obtain a water to cement + silica fume ratio of about 0.40. The results showed that the rebound loss was reduced by a factor of about 4 compared to an ordinary dry shotcrete process without any silica fume addition. The cohesiveness of the shotcrete was very and a layer of 30 cm could easily be applied in one pass on the vertical tunnel wall.

## Claims

1. A method of dry shotcreting which comprises forming a premix of cement and sand (1), supplying (2) the dry premix to a nozzle (5), supplying water (11) to the nozzle (5) and expelling the resulting mixture of cement sand and water from the nozzle, characterised in that silica fume is supplied to the dry premix together with the water.

2. A method as claimed in Claim 1, characterised in that the silica fume is added in the form of a slurry of water and silica fume, the slurry having a content of less than 50% by weight of silica fume.

3. A method as claimed in Claim 2 characterised in that the slurry of silica fume and water contains between 5 and 25% by weight of silica fume.

4. A method as claimed in any preceding claim in which the silica fume is arranged to represent between 6 and 10% by weight of the cement.

5. A method as claimed in any of Claims 1 to 3 characterised in that the slurry of silica fume and water is fed directly to the nozzle.

6. A method as claimed in any of claims 1 and 5 characterised in that a slurry of silica fume and water containing about 50% by weight of silica fume is continuously fed to a water pipe running to the spray nozzle in an amount necessary to obtain a slurry of silica fume and water in the nozzle containing less than 40% by weight of silica fume.

7. A method as claimed in any preceding claim characterised in that curing accelerators and/or water-reducing agents are added to the slurry of silica fume and water.

8. A method as claimed in any preceding claim characterised in that the nozzle (5) has a ring (6) provided with openings (7) by means of which the silica fume and water slurry is formed into a curtain in front of the premix as it is ejected from the nozzle (5).

## Patentansprüche

1. Spritzbeton-Trockenverfahren unter Herstellung einer Vormischung aus Zement und Sand (1), Zuführung (2) der trockenen Vormischung zu einer Düse (5), Zufuhr von Wasser (11) zu der Düse (5) und Ausstoß des erhaltenen Gemisches aus Zement, Sand und Wasser aus der Düse, dadurch gekennzeichnet, daß der trockenen Vormischung feinteiliges Siliciumdioxid zusammen mit dem Wasser zugeführt wird.

2. Verfahren nach Anspruch 2, dadurch gekennzeichnet, daß man das feinteilige Siliciumdioxid als Aufschlämmung von Wasser und feinteiligem Siliciumdioxid, deren Siliciumdioxidgehalt unter 50 Gew.% liegt, zugibt.

3. Verfahren nach Anspruch 2, dadurch gekennzeichnet, daß der Siliciumdioxidgehalt der Aufschlämmung aus feinteiligem Siliciumdioxid und Wasser zwischen 5 und 25 Gew.% beträgt.

4. Verfahren nach einem der Ansprüche 1 bis 3, gekennzeichnet durch die Verwendung von feinteiligem Siliciumdioxid in einer Menge zwischen 6 und 10 Gew.% bezüglich des Zements.

5. Verfahren nach einem der Ansprüche 1 bis 3, dadurch gekennzeichnet, daß die Aufschlämmung aus feinteiligem Siliciumdioxid und Wasser der Düse direkt zugeführt wird.

6. Verfahren nach Anspruch 1 oder 5, dadurch gekennzeichnet, daß eine etwa 50 Gew.% an feinteiligem Siliciumdioxid enthaltende Aufschlämmung von feinteiligem Siliciumdioxid und Wasser einem zur Sprühdüse führenden Wasserrohr kontinuierlich in einer solchen Menge zugeführt wird, daß in der Düse der Gehalt der wäßrigen Aufschlämmung an feinteiligem Siliciumdioxid unter 40 Gew.% liegt.

7. Verfahren nach einem der Ansprüche 1 bis 6, dadurch gekennzeichnet, daß man der Aufschlämmung aus feinteiligem Siliciumdioxid und Wasser Abbindebeschleuniger und/oder wasserreduzierende Mittel zugibt.

8. Verfahren nach einem der Ansprüche 1 bis 7, dadurch gekennzeichnet, daß die Düse (5) einen Ring (6) mit Öffnungen (7) aufweist, mittels derer die Aufschlämmung aus dem feinteiligen Siliciumdioxid und Wasser beim Ausstoßen der Vormischung aus der Düse (5) als Flüssigkeitsvorhang vor die Vormischung gespritzt wird.

## Revendications

1. Procédé de projection de béton à sec dans lequel on prépare un prémélange de ciment et de sable (1), on fournit (2) le prémélange sec à une buse (5), on fournit de l'eau (11) à la buse (5) et on projette le mélange résultant de ciment, de sable et d'eau à partir de la buse, caractérisé en ce qu'une vapeur de silice est fournie au prémélange sec simultanément avec l'eau.

2. Procédé selon la revendication 1, caractérisé en ce que la vapeur de silice est ajoutée sous la forme d'une boue d'eau et de vapeur de silice, la boue ayant un contenu inférieur à 50 % en poids de vapeur de silice.

3. Procédé selon la revendication 2, caractérisé en ce que la boue de vapeur de silice et d'eau contient entre 5 et 25 % en poids de vapeur de silice.

4. Procédé selon l'une quelconque des revendications précédentes, dans lequel la vapeur de silice est disposée pour représenter entre 6 et 10 % en poids du ciment.

5. Procédé selon l'une quelconque des revendications 1 à 3, caractérisé en ce que la boue de vapeur de silice et d'eau est amenée directement dans la buse.

6. Procédé selon l'une quelconque des revendications 1 et 5, caractérisé en ce que la boue de vapeur de silice et d'eau contenant sensiblement 50 % en poids de vapeur de silice est continuellement amenée à une conduite d'eau conduisant à la buse de pulvérisation selon une quantité nécessaire pour obtenir une boue de vapeur de silice et d'eau dans la buse contenant moins de 40 % en poids de vapeur de silice.

7. Procédé selon l'une quelconque des revendications précédentes, caractérisé en ce que des accélérateurs de conservation et/ou des agents réducteurs sont ajoutés à la boue de vapeur de silice et d'eau.

8. Procédé selon l'une quelconque des revendications précédentes, dans lequel la buse (5) est munie d'un anneau (6), comportant des ouvertures (7) au moyen duquel la boue de vapeur de silice et d'eau forme un rideau devant le prémélange lorsqu'il est éjecté de la buse (5).
